# EUROPÄISCHE PATENTSCHRIFT

(11) **EP 3 558 559 B1**
(45) Veröffentlichungstag und Bekanntmachung des Hinweises auf die Patenterteilung: **18.11.2020**
(21) Anmeldenummer: 17835801.6
(22) Anmeldetag: 22.12.2017
(51) Int. Cl.: B22C 1/22, C08G 18/54, B22C 1/16, C08G 18/76, C08G 18/18, C08G 8/36

(54) **KOMPONENTENSYSTEM ZUR HERSTELLUNG VON KERNEN UND FORMEN**
COMPONENT SYSTEM FOR PRODUCING CORES AND MOLDS
SYSTÈME D'ÉLÉMENTS DESTINÉ À LA FABRICATION DE NOYAUX ET DE MOULES

(30) Priorität: 23.12.2016 DE 102016125702
(43) Veröffentlichungstag der Anmeldung: 30.10.2019
(73) Patentinhaber: ASK Chemicals GmbH, 40721 Hilden (DE)
(72) Erfinder: PRIEBE, Christian, 42489 Wülfrath (DE); MÜLLER, Jens, 42781 Haan (DE); DETERS, Heinz, 40470 Düsseldorf (DE); SCHNEIDER, Philip, 40231 Düsseldorf (DE); LENZEN, Frank, 40299 Düsseldorf (DE); DÖRSCHEL, Markus, 50737 Köln (DE)
(74) Vertreter: Müller Schupfner & Partner Patent- und Rechtsanwaltspartnerschaft mbB
(86) Internationale Anmeldenummer: PCT/DE2017/101104
(87) Internationale Veröffentlichungsnummer: WO 2018/113852

(56) Entgegenhaltungen:
- EP-A2- 1 057 554
- DE-A1-102006 037 288

## Beschreibung

Die vorliegende Erfindung betrifft ein Komponentensystem zur Herstellung eines Bindemittels auf Basis von Phenolharzen vom Benzylethertyp und Isocyanate enthaltend unpolare Lösemittel zum Einsatz in Phenolharz-Polyurethan-Cold Box-Verfahren (PUCB-Verfahren) und/oder Phenolharz-Polyurethan-No Bake-Verfahren (PUNB-Verfahren). Weiterhin betrifft die Erfindung Formstoffmischungen enthaltend das Bindemittel und Formgrundstoffe und die Verwendung des Komponentensystems für den Metallguss.

### Hintergrund der Erfindung und allgemeiner Stand der Technik

Die Herstellung von Kernen und Formen nach dem PUCB- und/oder nach dem PUNB-Verfahren hat in der Gießereiindustrie große Bedeutung erlangt. Zur Bindung eines feuerfesten Formgrundstoffes werden dabei Zwei-Komponenten-Polyurethan-Systeme eingesetzt. Die Polyol-Komponente besteht aus einem Polyol mit mindestens zwei OH-Gruppen pro Molekül, die Isocyanat-Komponente aus einem Isocyanat mit mindestens zwei NCO-Gruppen pro Molekül. Als Polyolkomponente werden u.a. Phenol-Formaldehyd-Harze eingesetzt. Die Aushärtung des Gemischs aus Formgrundstoff und Bindemittel, kurz auch Formstoffmischung genannt, erfolgt beim PUCB-Verfahren mit Hilfe von niedrigsiedenden tertiären Aminen, die nach der Formgebung gasförmig oder als Aerosol durch die Formstoffmischung geleitet werden (vergleiche US 3409579). Üblicherweise erfolgt dies mit Hilfe eines Trägergases, z.B. Luft, Stickstoff oder CO₂, in das zumindest ein tertiäres Amin eindosiert wird. Beim PUNB-Verfahren erfolgt eine Zugabe von flüssigen tertiären Aminen und/oder Metallverbindungen als Katalysator zur Formstoffmischung.

Für Bindemittel in Formstoffmischungen zur Herstellung von Formen und Kernen für den Metallguss ist der Einsatz von aromatischen Kohlenwasserstoffen bereits gängige Praxis und die Verwendung von unpolaren anderen Lösemitteln bereits vorgeschlagen worden. Eine wichtige Rolle nehmen hier die Kieselsäureester und/oder Kieselsäurederivate ein.

Die EP 1057554 B1 beschreibt die Verwendung von Tetraalkylsilikaten als Lösemittel in Cold-Box Bindersystemen. In der näheren Beschreibung des Benzyletherharzes wird nicht auf veretherte Methylolgruppen und nur auf Alkylphenole mit einem Alkylrest von 1 bis 8 Kohlenstoffatomen eingegangen. Vorteilhafterweise liegt der Gehalt an Alkylsilikaten, Alkylsilikat-Oligomeren oder deren Mischungen im Bereich von 1 bis 40 Gew.-% in der Phenolharz-Komponente. Vorzugsweise wird ein Co-Lösungsmittel zugesetzt, welches insbesondere ein die Polarität erhöhendes Lösungsmittel, wie z.B. Dibasic Ester, ein Gemisch aus nicht näher spezifizierten C₄- bis C₆- Dicarbonsäuremethylestern ist. Die Einschränkung der Konzentration und die Bevorzugung eines Co-Lösungsmittels sind Hinweise auf eine unzureichende Löslichkeit bei einer höheren Konzentration an Alkylsilikaten. Dieses wird durch die Beispiele der EP 1057554 B1 verdeutlicht, wonach diese stets mindestens 5 Gewichtsteile Dibasic Ester in der Phenolharzkomponente aufweisen. Die verwendete C₄- bis C₆- Dicarbonsäure wird nicht näher spezifiziert.

Die WO 2009/130335 A2 beschreibt Benzyletherharze, welche mit einem Alkylsilikat umgeestert werden, mit dem Ziel, eine anorganische Polymereinheit in das Benzyletherharz einzubauen. Auch hier kann es bei sehr hohen Molmassen erforderlich sein, ein Co-Lösungsmittel zuzusetzen. Aus den Beispielen ist ersichtlich, dass das erfindungsgemäße Resolharz vollständig in Tetraethylsilikat löslich ist.

DE 102015201614 A1 beschreibt eine weitere Ausführungsform der Verwendung von Alkylsilikaten in Cold-Box Bindemitteln. Bestehend aus einem phenolischen Resol, mit freien und/oder veretherten Methylolgruppen (mit einem C₁- bis C₄- Alkohol) sowie einem Alkylsilikat und/oder Alkysilikat-Oligomeren und mindestens einer Verbindung aus der Gruppe der Dialkylester von C₄- bis C₆- Dicarbonsäuren. Bevorzugt sind Dimethylester von C₄- bis C₆- Dicarbonsäuren. Die verwendete C₄-bis C₆- Dicarbonsäure wird nicht näher spezifiziert. Bevorzugt werden nicht veretherte Benzyletherharze.

DE 102004057671 B4 beschreibt Benzyletherharze, deren Methylolgruppe(n) mit einem C₁- bis C₁₀- Alkohol, besonders bevorzugt n-Butyl, verethert sind. Parallel offenbart die Strukturformel die Verwendung eines Alkylphenols mit einem Alkylrest von 1 bis 10 C-Atomen. Es finden sich keine Hinweise zur Löslichkeit in reinem Tetraethylsilikat, außer in den Versuchsbeispielen 2, 4, 5 und 9. Auffällig ist, dass die Gehalte an verethertem Benzyletherharz zwischen 75 und 90 Gew % liegen. EP 1 137 500 B1 beschreibt veretherte Benzyletherharze. Hierzu wird ein C₁- bis C₈-Alkohol zu 25mol% mit den Hydroxymethan-Gruppen (-CH₂-OH) verethert. Alkylphenole sind nicht separat beansprucht, werden in der Patentschrift in einer allgemeinen Aufzählung bis C₂₆-Kette erwähnt. Unpolare Lösemittel werden in den Ansprüchen und Beispielen nicht genannt.

DE 102006037288 A1 beschreibt PUCB-Bindemittel, welche mit Cardanol modifiziert sind. Durch den Zusatz von Cardanol wird die Konzentration an Monomeren reduziert. Kieselsäureester bzw. Kieselsäureesteroligomere werden als Lösemittel nicht erwähnt.

### Aufgabe der Erfindung

Aufgabe der Erfindung ist es, ein Phenolharz vom Benzylethertyp zur Verfügung zu stellen, welches vollständig in einem unpolaren Lösemittel löslich ist und somit ohne oder mit nur geringen Mengen Co-Lösungsmittel homogen in Lösung geht. Dieses ist vorteilhaft, da Co-Lösungsmittel, wie z.B. Dicarbonsäureester, bekanntermaßen zu zusätzlichen Emissionen während des Gießprozesses führen können, beispielsweise durch Reaktion zu Methacrylaten.

### Zusammenfassung der Erfindung

Die Aufgabe konnte durch den Gegenstand der unabhängigen Patentansprüche gelöst werden. Vorteilhafte Weiterbildungen sind Gegenstand der Unteransprüche oder nachfolgend beschrieben.

Gegenstand der Erfindung ist somit die Verwendung von bestimmten unpolaren Lösemitteln und ggf. einem Co-Lösungsmittel in einer Polyol-Komponente auf Basis von Phenolharzen vom Benzylethertyp. Weitere Bestandteile des Komponentensystems sind eine Isocyanat-Komponete mit Isocyanaten mit mindestens zwei Isocyanat-Gruppen pro Molekül.

Die Phenolharze vom Benzylethertyp weisen ein mit einem aliphatischen Kohlenwasserstoffrest substituiertes Phenol als Monomerbaustein auf, das am Aromaten mit einem aliphatischen Kohlenwasserstoffrest mit 11 bis 26 Kohlenstoffatomen, vorzugsweise 12 bis 18 Kohlenstoffatomen und 0 bis 4 Doppelbindungen, vorzugsweise 0 bis 3 Doppelbindungen substituiert ist, wobei der Anteil des Kohlenwasserstoffrestes des substituierten Phenols im Phenolharz 0,5 bis 20 Gew.% beträgt. Der Kohlenwasserstoff-Rest befindet sich vorzugsweise in meta- oder para-Stellung, insbesondere in der meta-Stellung. Der Anteil der Kohlenwasserstoff-substituierten phenolischen Gruppe, insbesondere an Cardanol und/oder Cardol, in dem Phenolharz vom Benzylethertyp liegt zwischen 0,5 und 20 Gew.%, bevorzugt 0,5 bis 15 Gew% und insbesondere bevorzugt 2 bis 12 Gew%.

Die Polyol-Komponente enthält ein Lösungsmittel, das Phenolharz vom Benzylethertyp bei Raumtemperatur lösen kann. Von dem Lösungsmittel sind zumindest 95 Gew.% ein unpolares Lösungsmittel und das unpolare Lösungsmittel steht per Definition für Kohlenwasserstoffe, Alkyl-/Alkoxy-Silane, Alkyl-/Alkoxy-Siloxane und deren Gemische.

### Detaillierte Beschreibung der Erfindung

Das Phenolharz vom Benzylethertyp hat z.B. folgende allgemeine Struktur, wobei die Monomereinheiten statistisch verknüpft sind:
Die im folgenden dargestellte Strukturformel stellt nur ein Beispiel der möglichen Verknüfungsvarianten dar. Die im Beispiel gezeigte ausschließliche o,o' -Verknüfung kann in der Realität in jeder Ausführungsart auch o,p' oder p,p' verknüft sein. Die o,o' Variante ist aber bevorzugt (o = ortho, p = para). 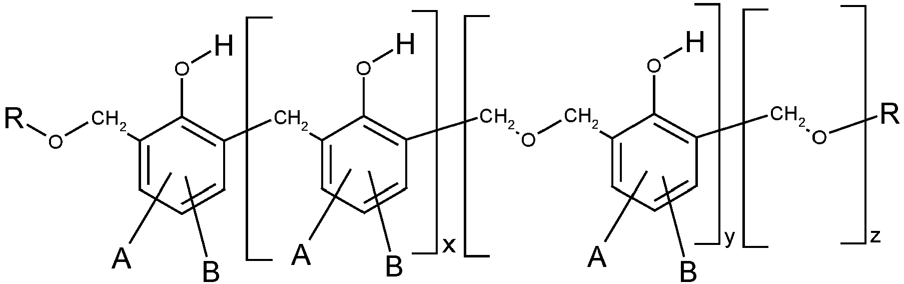
x = 0-20, insbesondere 1 bis 10
y = 0 - 20, insbesondere 2 bis 10
z = 0 - 100, insbesondere 1 bis 5, besonders bevorzugt 1, mit im Mittel x + y + z > 2,
R = - H; hydrocarbyl
und jeweils unabhängig von x und y
A = - H; hydrocarbyl; -O-hydrocarbyl; -OH und
B = - H; hydrocarbyl; -O-hydrocarbyl; -OH,
wobei für mindestens ein A oder mindestens ein B, A und/oder B hydrocarbyl ist.

Um Phenolharze vom Benzylethertyp zu erhalten, wird vorzugsweise eine mindestens äquivalente Molzahl an Aldehyd-Verbindung, bezogen auf die Molzahl der Phenol-Verbindungen, eingesetzt. Bevorzugt beträgt das Molverhältnis der aldehydischen Verbindung zur phenolischen Verbindung 1,05 : 1,0 bis 2,5 : 1, besonders bevorzugt 1,1 : 1 bis 2,2 : 1, insbesondere bevorzugt 1,2 : 1 bis 2,0 : 1.

Die Herstellung des Phenolharzes vom Benzylethertyp erfolgt nach dem Fachmann bekannten Verfahren. Dabei werden die Phenol-Verbindung und die Aldehyd-Verbindung in Gegenwart eines zweiwertigen Metallions, bei Temperaturen von vorzugsweise weniger als 130°C umgesetzt. Das entstehende Wasser wird abdestilliert. Dazu kann der Reaktionsmischung ein geeignetes Schleppmittel zugesetzt werden, beispielsweise Toluol oder Xylol, oder die Destillation wird bei reduziertem Druck durchgeführt.

Zur Herstellung von Phenolharzen vom Benzylethertyp geeignete Katalysatoren sind Salze zweiwertiger Ionen von Metallen, wie Mn, Zn, Cd, Mg, Co, Ni, Fe, Pb, Ca und Ba, insbesondere Zn-Salze. Bevorzugt wird Zinkacetat verwendet. Die eingesetzte Menge ist nicht kritisch. Typische Mengen an Metallkatalysator betragen 0,02 bis 0,3 Gew.%, bevorzugt 0,02 bis 0,19 Gew.%, bezogen auf die Gesamtmenge an Phenol-Verbindungen und Aldehyd-Verbindung.

Solche Harze sind z.B. in US 3485797 und in EP 1137500 B1 beschrieben, auf deren Offenbarung hiermit sowohl hinsichtlich der Phenolharze vom Benzylethertyp selbst, als auch hinsichtlich ihrer Herstellung ausdrücklich Bezug genommen wird.

Überraschend wurde gefunden, dass sich nach einer Ausgestaltung eine Löslichkeit der Phenolharze vom Benzylethertyp ergibt, wenn diese in statistischer Verteilung in der Polymerisationskette eine Vielzahl folgender Verknüpfungen enthalten:
a) R-CH₂-O-R¹
b) R-CH₂-R²
c) R-CH₂-O-CH₂-R²
d) R²-CH₂-R²
e) R²-CH₂-O-CH₂-R²
f) R²-CH₂-O-R¹
   andererseits aber vorzugsweise
g) frei von Si-O-Si und
h) frei von C-O-Si Verknüpfungen ist.
   wobei
   - R: für einen ein- (als Endgruppe) oder zweibindigen (beidseitig in die Kette eingebunden) phenolischen Rest steht, der zumindest über eine Methylen- oder eine Methylenether-Gruppe an einen weiteren phenolischen Rest gebunden ist.
   - R¹: für eine gesättigte oder ungesättigte und/oder geradkettige oder verzweigte Kohlenstoffkette von C₁ bis C₁₈ steht, bevorzugt von C₁ bis C₁₂, insbesondere bevorzugt von C₁ bis C₉, als Endgruppe.
   - R²: für einen ein- oder zweibindigen substituierten phenolischen Rest steht, der frei oder über eine Methylen- oder eine Methylenether-Gruppe an einen weiteren phenolischen Ring gebunden ist, mit neben der phenolischen Hydroxyl-Gruppe an der (jeweils zur phenolischen Hydroxyl-Gruppe) stehenden ortho und/oder para und/oder meta Stellung jeweils unabhängig voneinander eine oder zwei C₁₁- bis C₂₆- Kohlenstoffketten, insbesondere C₁₂- bis C₁₈- Kohlenstoffketten. Bevorzugt ist die meta Stellung. Die Kohlenstoffketten können unabhängig voneinander gesättigt oder ungesättigt und/oder verzweigt oder geradkettig sein. Die Anzahl der fakultativ enthaltenden Doppelbindungen je Kohlenstoffkette ist nicht limitiert und kann zwischen 1 und 4 betragen. Besonders bevorzugt ist Cardanol und/oder Cardol und/oder alkylhydriertes Cardanol und/oder alkylhydriertes Cardol aufweisend jeweils eine vollständig gesättigte Alkylkette. In einer weiteren Ausführungsform kann das Cardanol und/oder Cardol ggf. zusätzlich ungebunden in der Phenolharzkomponente vorliegen, ohne in die Benzyletherharzstruktur eingebaut zu sein. Weiterhin können zusätzlich ein oder zwei Hydroxyl-Gruppen zugegen sein.

Bevorzugt sind bis zu 25mol% der -CH₂OH-Gruppen im Phenolharze vom Benzylethertyp verethert, insbesondere mit C₁- bis C₁₂-, insbesondere C₁- bis C₄-Kohlenwasserstoffgruppen.

Der Anteil der Kohlenwasserstoff-substituierten phenolischen Reste R², insbesondere an Cardanol und/oder Cardol, in dem Phenolharze vom Benzylethertyp liegt zwischen 0,5 und 20 Gew.%, bevorzugt 0,5 bis 15 Gew% und insbesondere bevorzugt 0,5 bis 12 Gew%. R² ist typischerweise Cardanol oder Cardol.

Beispiele für geeignete phenolische Reste R sind Phenol, o-Kresol, m-Kresol, p-Kresol, 3,5-Xylenol, 3,4-Xylenol, 3,4,5-Trimethylphenol, 3-Ethylphenol, 3,5-Diethylphenol, p-Butylphenol, 3,5-Dibutylphenol, p-Amylphenol, Cyclohexylphenol, p-Octylphenol, p-Nonylphenol, Dinonylphenol, 3,5-Dicyclohexylphenol, p-Crotylphenol, p-Phenylphenol, 3,5-Dimethoxyphenol und p-Phenoxyphenol.

Bevorzugte mehrwertige phenolische Reste R weisen 2 bis 4 phenolische Hydroxylgruppen auf. Spezielle Beispiele geeigneter mehrwertiger Phenole sind Brenzkatechin, Resorcin, Hydrochinon, Pyrogallol, Phloroglucin, 2,5-Dimethylresorcin, 4,5-Dimethylresorcin, 5-Methylresorcin, oder 5-Ethylresorcin. Es können auch Gemische aus verschiedenen ein- und mehrwertigen und/oder substituierten und/oder kondensierten Phenolkomponenten für die Herstellung des Benzyletherharzes verwendet werden.

Als weitere Aldehyde zur Herstellung der Phenol-Formaldehyd-Harzkomponente eignen sich neben Formaldehyd auch zusätzlich Aldehyde der Formel:

R-CHO ,

wobei R ein Kohlenstoffatomrest mit vorzugsweise 2 bis 8, besonders bevorzugt 1 bis 3 Kohlenstoffatomen ist. Spezielle Beispiele sind Acetaldehyd, Propionaldehyd, Furfurylaldehyd und Benzaldehyd. Besonders bevorzugt wird Formaldehyd eingesetzt, entweder in seiner wässrigen Form, als para-Formaldehyd oder Trioxan.

Erfindungsgemäße als unpolare Lösemittel eingesetzte Verbindungen weisen folgende Struktur auf
a) ein Alkyl-/Alkoxy-Silan (n = 0) oder ein Alkyl-/Alkoxy-Siloxane (n > 1), insbesondere Kieselsäureester und/oder Kieselsäureesteroligomere 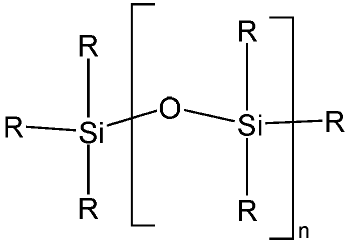
   n = 0 - 20
   R = jeweils unabhängig von n und von einem anderen R C₁- bis C₆- hydrocarbyl; -O-hydrocarbyl(C₁- bis C₆)
   und/oder
b) ein Kohlenwasserstoff, insbesondere ein Alkyl-/Alkenylbenzol. Ausgehend von Benzol sind an dem aromatischen Ring unabhängig voneinander Alkyl- und/oder Alkenylgruppen substituiert, welche eine Kettenlänge von C₁ bis C₃₀, bevorzugt von C₁ bis C₂₀ und insbesondere bevorzugt von C₁ bis C₁₆ aufweisen. Unabhängig von einander können ein bis sechs Ringwasserstoffe des Benzols gegen ein Alkyl- und/oder Alkenylrest substituiert sein, bevorzugt werden 1 bis 4, besonders bevorzugt 1 bis 3 Ringwasserstoffe substituiert. Unabhängig davon kann die Alkyl- oder Alkenylkette geradkettig oder verzweigt sein.

Auch Mischungen der unpolaren Lösemittel untereinander sind möglich.

Geeignete Alkyl-/Alkoxy-Silane oder Alkyl-/Alkoxy-Siloxane sind z.B. Ester der Orthokieselsäure, in denen 1, 2 oder 3 Alkoholreste durch substituierte oder unsubstituierte Kohlenwasserstoffreste ersetzt sind, Verbindungen der Formel R¹ₙSi(OR)₄₋ₙ, worin n = 1, 2 oder 3 ist, wobei jede Gruppe R unabhängig von etwaigen weiteren Gruppen R einen organischen Rest bedeutet, bevorzugt verzweigtes oder unverzweigtes C₁- bis C₃₀-Alkyl oder Aryl, wie entsprechend in Zusammenhang mit dem ersten Aspekt definiert.

R¹ ist hierbei ein substituierter oder unsubstituierter, verzweigter oder unverzweigter Kohlenwasserstoffrest und die Reste R¹ sind im Falle von n = 2 oder 3 gleich oder verschieden. Bevorzugt sind die Reste R¹ substituiertes oder unsubstituiertes, verzweigtes oder unverzweigtes C₁- bis C₃₀-Alkyl oder substituiertes oder unsubstituiertes Aryl und besonders bevorzugt substituiertes oder unsubstituiertes, verzweigtes oder unverzweigtes C₁- bis C₆-Alkyl oder substituiertes oder unsubstituiertes C₆ bis C₁₀-Aryl. Am meisten bevorzugt ist unsubstituiertes, verzweigtes oder unverzweigtes C₁ bis C₆-Alkyl oder unsubstituiertes Phenyl. Methyl, Ethyl und Propyl sind hierin wiederum besonders bevorzugt.

Bevorzugt sind modifizierte Ester ausgewählt aus der Gruppe bestehend aus Tetraalkoxysilanen, Monoalkyltrialkoxysilanen, Dialkyldialkoxysilanen, Trialkylmonoalkoxysilanen, Monoaryltrialkoxysilanen, Diaryldialkoxysilanen und Triarylmonoalkoxysilanen, wobei die Alkyl- oder Alkoxylgruppen bevorzugt C₁ bis C₆-Alkylgruppen sind. Bevorzugt sind modifizierte Ester ausgewählt aus der Gruppe bestehend aus Teraethoxylsilan, Tetrapropoxysilan, Methyltrimethoxysilan, Methyltriethoxysilan, Methyltripropoxysilan, Methyltributoxysilan, Ethyltrimethoxysilan, Methyltriethoxysilan, Ethyltriethoxysilan, n-Propyltrimethoxysilan, n-Propy-Itriethoxysilan, Isopropyltrimethoxysilan, Isopropyltriethoxysilan, Vinyltrimethoxysilan, Vinyltriethoxysilan, 3-Glycidoxipropyltrimethoxysilan, 3-Glycidoxypropy-Itriethoxysilan, 3,4-Epoxycyclohexyl-trimethoxysilan, Dimethoxydimethylsilan, Diethoxydimethylsilan, Diethyldimethoxysilan und Diethyldiethoxysilan. Besonders bevorzugt sind Tetraethylorthosilikat, Tetrapropylorthosilikat, deren Mischungen und deren Oligomere beziehungsweise Mischungen der Oligomere. Insbesondere bevorzugt sind Tetraethylortho- und Tetrapropylorthosilikat beziehungsweise deren Mischungen.

In einer weiteren Ausführungsform wurde gefunden, dass der Zusatz eines Co-Lösungsmittels zu den Phenolharzen vom Benzylethertyp die Löslichkeit verbessert. Damit ist es möglich homogene Lösungen mit einem höheren Anteil an Kieselsäureester zu formulieren. Ein vorteilhaftes Co-Lösungsmittel sind z.B. Diester von Dicarbonsäuren.

Bevorzugt enthält das Phenolharz vom Benzylethertyp (Benzyletherharz plus Lösemittel) weniger als 1,5 Gew% Wasser, besonders bevorzugt weniger als 1,0 Gew% und insbesondere bevorzugt weniger als 0,8 Gew% Wasser.

Bevorzugt enthält das Phenolharz vom Benzylethertyp (Benzyletherharz plus Lösemittel) weniger als 2,0 Gew% aliphatische Alkohole, besonders bevorzugt weniger als 1,5 Gew% aliphatische Alkohole, bevorzugt weniger als 1,0 Gew% aliphatische Alkohole von C₁ bis C₁₈.

In einer bevorzugten Ausführungsform, wenn als Lösemittel ein Kieselsäureester und/oder ein Kieselsäureesteroligomer verwendet wird, enthält das Phenolharz vom Benzylethertyp (Benzyletherharz plus Lösemittel) weniger als 1,5 Gew% aliphatischen Alkohol, besonders bevorzugt weniger als 1,0 Gew % und insbesondere bevorzugt weniger als 0,8 Gew% aliphatischen Alkohol.

Bevorzugt wird das Lösemittel in einer Menge, bezogen auf die Polyol-Komponente von 10 - 70 Gew.%, besonders bevorzugt von 26-55 Gew. % und insbesondere bevorzugt von 41-50 Gew.% verwendet.

Wird ein erfindungsgemäßes Co-Lösungsmittel verwendet, so wird bevorzugt 0,5 bis 9,6 Gew%, besonders bevorzugt von 1 bis 7,9 Gew.% und insbesondere bevorzugt von 1 bis 4,9 Gew% bezogen auf die Polyolkomponente verwendet.

Die Isocyanatkomponente des Bindemittelsystems umfasst ein aliphatisches, cycloaliphatisches oder aromatisches monomeres - oder polymeres Isocyanat, bevorzugt mit im Mittel 2 bis 5 Isocyanatgruppen pro Molekül. Je nach den gewünschten Eigenschaften können auch Gemische von Isocyanaten eingesetzt werden.

Geeignete Isocyanate umfassen aliphatische Isocyanate, wie z.B. Hexamethylendiisocyanat, alicyclische Isocyanate wie z.B. 4,4'-Dicyclohexylmethandiisocyanat und Dimethylderivate hiervon. Beispiele geeigneter aromatischer Isocyanate sind Toluol-2,4-diisocyanat, Toluol-2,6-diisocyanat, 1,5-Naphthalendiisocyanat, Triphenylmethantriisocyanat, Xylylendiisocyanat und Methylderivate hiervon, sowie Polymethylenpolyphenylisocyanate. Bevorzugte Isocyanate sind aromatische Isocyanate, insbesondere bevorzugt sind Polymethylenpolyphenylpolyisocyanate wie z.B. technisches 4,4'-Diphenylmethandiisocyanat, d.h. 4,4'-Diphenylmethandiisocyanat mit einem Anteil an Isomeren und höheren Homologen.

Die Isocyanate können auch derivatisiert sein, indem zweiwertige Isocyanate derart miteinander umgesetzt werden, dass ein Teil ihrer Isocyanatgruppen zu Biuret-, Allophanat-, Uretdion - oder Carbodiimidgruppen derivatisiert ist. Interessant sind z.B. Uretdion -Gruppen aufweisende Dimerisierungsprodukte, z.B. von MDI oder TDI. Derartige derivatisierte Isocyanate werden vorzugsweise aber nur als ein Bestandteil neben obigen nicht-derivatsierten Isocyanaten eingesetzt.

Bevorzugt wird das Isocyanat in einer Menge eingesetzt, dass die Anzahl der Isocyanatgruppen von 80 bis 120 %, bezogen auf die Anzahl der freien Hydroxylgruppen des Harzes, beträgt.

Die Isocyanat-Komponente des Bindemittelsystems wird bevorzugt als Lösung in einem organischen Lösemittel oder einer Kombination von organischen Lösemitteln eingesetzt. Lösemittel können z.B. deshalb erforderlich sein, um die Komponenten des Bindemittels in einem ausreichend niedrigviskosen Zustand zu halten. Dieser ist u. a. erforderlich, um eine gleichmäßige Vernetzung des feuerfesten Formstoffes und dessen Rieselfähigkeit zu erhalten.

Als Lösemittel der als Bestandteil der Isocyanat-Komponete werden entweder unpolare Lösemittel, wie die erfindungsgemäß genannten oder polaren Lösemittel oder Gemische davon, eingesetzt. Im Sinne der Erfindung ist die Art des Lösemittels nicht limitiert.

Neben den bereits erwähnten Bestandteilen können die Bindemittelsysteme weitere Additive enthalten, z. B. Silane (z.B. gemäß EP 1137500 B1), interne Trennmittel, z. B. Fettalkohole (z.B. gemäß US 4,602,069), trocknende Öle (z.B. gemäß US 4,268,425), Komplexbildner (z.B. gemäß US 5,447,968) Fließverbesserer, wie Silikontenside und Additive zur Verlängerung der Verarbeitungszeit (z.B. gemäß US 4,540,724) oder Gemische davon.

Weiterhin betrifft die Erfindung Formstoffmischungen enthaltend das Bindemittel auf Basis von Phenolharzen vom Benzylethertyp, feuerfesten Formgrundstoff und Isocyanate und ggf. Katalysatoren und aus den Formstoffmischungen nach Härtung hergestellte Kerne, Formen und Speiser. Auch Gegenstand der Erfindung ist die Verwendung der Kerne, Formen und Speisern für den Metallguss, insbesondere den Eisen- sowie Aluminiumguss.

Als feuerfester Formgrundstoff (nachfolgend auch kurz Formgrundstoff) können für die Herstellung von Gießformen übliche und bekannte Materialien sowie deren Mischungen verwendet werden. Geeignet sind beispielsweise Quarz-Sand, Zirkon-Sand, Chromerzsand, Olivin, Vermiculit, Bauxit, Schamotte sowie sogenannte künstliche Formgrundstoffe, also Formgrundstoffe, die durch industrielle Verfahren der Formgebung in sphärische oder annähernd sphärische (zum Beispiel ellipsoide) Form gebracht wurden. Beispiele hierfür sind Glasperlen, Glasgranulat oder künstliche, spherische, keramische Sande - sogenannte Cerabeads® aber auch Spherichrome®, SpherOX® oder "Carboaccucast", sowie Mikrohohlkugeln wie sie unter anderem als Komponente aus Flugaschen isoliert werden können, wie z.B. Aluminiumsilikathohlkugeln (sog. Microspheres). Mischungen der genannten Feuerfeststoffe sind ebenfalls möglich.

Besonders bevorzugt sind Formgrundstoffe, die mehr als 50 Gew.% Quarzsand bezogen auf den feuerfesten Formgrundstoff enthalten. Unter einem feuerfesten Formgrundstoff werden Stoffe verstanden, die einen hohen Schmelzpunkt (Schmelztemperatur) aufweisen. Vorzugsweise ist der Schmelzpunkt des feuerfesten Formgrundstoffs größer als 600°C, bevorzugt größer als 900°C, besonders bevorzugt größer als 1200°C und insbesondere bevorzugt größer als 1500°C.

Der feuerfeste Formgrundstoff macht vorzugsweise größer 80 Gew.%, insbesondere größer 90 Gew.%, besonders bevorzugt größer 95 Gew.%, der Formstoffmischung aus.

Der mittlere Durchmesser der feuerfesten Formgrundstoffe liegt in der Regel zwischen 100 µm und 600 µm, bevorzugt zwischen 120 µm und 550 µm und besonders bevorzugt zwischen 150 µm und 500 µm. Die Partikelgröße lässt sich z.B. durch Siebung nach DIN ISO 3310 bestimmen. Besonders bevorzugt sind Teilchenformen mit größter Längenausdehnung zu kleinster Längenausdehnung (rechtwinkelig zueinander und jeweils für alle Raumrichtungen) von 1:1 bis 1:5 oder 1:1 bis 1:3, d.h. solche die z.B. nicht faserförmig sind.

Der feuerfeste Formgrundstoff weist vorzugsweise einen rieselfähigen Zustand auf, insbesondere um die erfindungsgemäße Formstoffmischung in üblichen Kernschießmaschinen verarbeiten zu können.

Geeignete Katalysatoren sind tertiäre Amine. Für das PUCB-Verfahren werden flüchtige tertiäre Amine eingesetzt wie Trimethylamin ("TMA", CAS RN 75-50-3), Dimethylethylamin ("DMEA", CAS 75-64-9), Dimethylisopropylamin ("DMIPA", CAS 996-35- 0), Dimethylpropylamin ("DMPA", CAS RN 926-63-6) und Triethylamin ("TEA", CAS RN 121-44-8). Für das PUNB-Verfahren werden flüssige tertiäre Amine eingesetzt. Dies schließt bei Raumtemperatur (25°C) flüssige tertiäre Amine ein als auch solche welche nach Erwärmen auf z.B. 40°C flüssig werden oder solche in einem geeigneten Lösungsmittel gelöst sind. Beispiele sind Tris(3-dimethyl-amino)propylamin, Isochinolin. Arylpyridine wie Phenylpyridin, Pyridin, Acridin, 2-Methoxypyridin, Pyridazin, 3-Chloropyridin, Chinolin, N-methylimidazol, N-ethylimidazol, 4,4'-Dipyridin, 4-Phenylpropylpyridin, 1-Methylbenzimidazol und 1,4-Thiazin.

Außerdem betrifft die Erfindung ein Verfahren zur Herstellung der Formstoffmischungen umfassend
(a) Vermischen von feuerfesten Formgrundstoffen mit dem erfindungsgemäßen Bindemittel (zumindest Phenolharz vom Benzylethertyp mit Lösungsmittel und Isocyanat) in einer bindenden Menge von 0,2 bis 15 Gew.%, bevorzugt 0,3 bis 14 Gew.%, besonders bevorzugt 0,4 bis 12 Gew.%, bezogen auf die Menge der feuerfesten Formgrundstoffe, und einen gleichzeitig (beim PUNB-Verfahren) oder separat später (beim PUCB-Verfahren) zugesetzten Katalysator zum Erhalt einer Formstoffmischung,
(b) Einbringen der in Schritt (a) erhaltenen Formstoffmischung in ein Formwerkzeug;
(c) ggf. Zusetzen des separat später zugesetzten Katalysators (PUCB) und Härten der Formstoffmischung im Formwerkzeug mit dem erfindungsgemäßen Katalysator, um einen Kern oder eine Gießform zu erhalten; und
(d) anschließendes Trennen des Kerns oder der Gießform vom Werkzeug und ggf. weiteres Härten.

Für die Herstellung der Formstoffmischung können zuerst die Komponenten des Bindemittelsystems vereinigt und dann zu dem feuerfesten Formgrundstoff zugegeben werden. Es ist jedoch auch möglich, die Komponenten des Bindemittels gleichzeitig oder nacheinander in beliebiger Reihenfolge zu dem feuerfesten Formgrundstoff zu geben.

Um eine gleichmäßige Mischung der Komponenten der Formstoffmischung zu erzielen, können übliche Verfahren verwendet werden. Die Formstoffmischung kann zusätzlich gegebenenfalls andere konventionelle Bestandteile, wie Eisenoxid, gemahlene Flachsfasern, Holzmehlgranulate, Pech und refraktäre Metalle enthalten.

Erfindungsgemäß kann die Aushärtung nach dem PUCB- oder nach dem PUNB-Verfahren erfolgen. Im Falle des PUCB-Verfahrens wird zum Härten ein niedrigsiedendes tertiäres Amin mittels eines inerten Trägergases gasförmig oder als Aerosol durch die geformte Formstoffmischung geleitet. Die Zugabe eines separaten Katalysators unterbleibt. Es können alle bekannten Cold Box-Aminkatalysatoren verwendet werden. Im Falle des PUNB-Verfahrens kann der Amin- oder Metallkatalysator bereits im Bindemittelsystem gelöst sein oder als separate Komponente dem Feuerfeststoff zugemischt werden, wobei die Zugabemenge ca. 0,1 Gew.% - ca. 5 Gew.% bezogen auf den Gesamtgehalt an Bindemittel im Feuerfeststoff beträgt

Die nach diesem Verfahren hergestellten Formkörper können an sich jede auf dem Gebiet der Gießerei übliche Form aufweisen. In einer bevorzugten Ausführungsform liegen die Formkörper in Form von Gießereiformen, -kernen oder Speisern vor. Diese zeichnen sich durch eine hohe mechanische Stabilität aus.

Weiter betrifft die Erfindung die Verwendung dieses Formkörpers für den Metallguss, insbesondere Eisen- sowie Aluminiumguss.

Die Erfindung wird im Weiteren anhand von bevorzugten Ausführungsformen bzw. Versuchsbeispielen näher erläutert, ohne auf diese beschränkt zu sein.

### Versuchsbeispiele

### Eingesetzte Komponenten

ISOCYANAT KOMPONENTE: homogene Mischung aus 80% Lupranat M 20 S und 20% Dynasylan A
KATALYSATOR 706 - Dimethylpropylamin, Lieferant ASK-Chemicals GmbH Quarzsand H 32 - Lieferant Quarzwerke GmbH
Lupranat M 20 S: polymeres Diphenylmethandiisocyanat (MDI), Funktionalität 2,6, Lieferant BASF SE
DBE - Dimethylester Gemisch von C₄-C₆ Dicarbonsäuren, Lieferant DuPont
Dynasilan A - Tetraethylorthosilikat monomer, Lieferant Evonik Industries, freier Ethanol Gehalt <0,5%
Solvesso 100 - Solvent Naphtha leicht, Lieferant EXXON Mobile
Silan GLYMO - 3-Glycidoxypropyltrimethoxysilan, Lieferant Evonik Industries
Phenol 99% - Lieferant Sigma Aldrich
Paraformaldehyd 91-93%, Lieferant INEOS Paraform
Zinkacetat-Dihydrat - Lieferant Sigma Aldrich
n-Butanol - Lieferant Sigma Aldrich
Palmer 1500-1, Mischung aus ca. 95% Cardanol und ca. 5% Cardol, Lieferant Palmer International
Alle Prozent-Angaben meinen Gew%.

### Benzyletherharzsynthese (Phenolharz vom Benzylethertyp)

### Benzyletherharz Beispiel 1 hergestellt gemäß der EP 1057554 A 1 (Vergleich)

In einem mit Rührwerk, Rückflusskühler und Thermometer ausgestatteten Reaktionsgefäß wurden 1540 g Phenol (99%), 704 g Paraformaldehyd (91%) und 0,44 g Zinkacetat-Dihydrat vorgelegt. Unter Rühren wurde die Temperatur gleichmäßig innerhalb 60 Minuten auf 105°C erhöht so lange gehalten, bis ein Brechungsindex (20°C) von 1,550 erreicht wurde. Danach wurde der Kühler auf atmosphärische Destillation umgestellt und die Temperatur innerhalb einer Stunde auf 125 bis 126°C gebracht. Bei dieser Temperatur wurde bis zum Erreichen eines Brechungsindex (20°C) von 1,593 weiterdestilliert. Danach wurde ein Vakuum angelegt und bei vermindertem Druck bis zu einem Brechungsindex (20°C) von 1,612 destilliert. Die Ausbeute betrug ca. 82 %. Der freie Phenol-Gehalt, bestimmt gaschromatographisch, lag bei 10,5 Gew.%, der Saligenin (2-Hydroxybenzylalkohol) Gehalt, bestimmt gaschromatographisch, lag bei 8,4 Gew.%.

### Benzyletherharz Beispiel 2

### hergestellt gemäß Ausführungsbeispiel 2, Harz A der DE 102004057671 B4 (Vergleich)

In einem mit Rührwerk, Rückflusskühler und Thermometer ausgestatteten Reaktionsgefäß wurden 234 g Phenol (99%), 107 g Paraformaldehyd (91%) und 0,295 g Zinkacetat-Dihydrat vorgelegt. Unter Rühren wurde die Temperatur gleichmäßig in 90 Minuten auf 110°C erhöht und 45 Minuten bei 110°C gehalten. Anschließend wurde auf Destillation umgestellt und innerhalb 60 Minuten die Temperatur auf 126°C gebracht. Es wurde so lange weiterdestilliert, bis ein Brechungsindex (20°C) von 1,590 bis 1,592 erreicht war. Anschließend wurde unter Vakuum (<30 mbar) bis zu einem Brechungsindex (20°C) von 1,613 bis1,615 weiter destilliert.

Anschließend wurde die Temperatur auf 100°C gesenkt und pro 12 Gewichtsteile des erhaltenen Benzyletherharzes wurden 9 Gewichtsteile n-Butanol zugegeben. Innerhalb 30 Minuten wurde die Benzyletherharz-Zusammensetzung auf Rückflusstemperatur gebracht und 4 Stunden unter Rückfluß gehalten. Dabei wurde in einem mit n-Butanol gefüllten Abscheider das entstehende Reaktionswasser kontinuierlich entfernt, wobei die wasserarme Phase zurück in das Reaktionsgemisch lief. Die Temperatur stieg von 119°C bis auf 127°C an. Bei 120°C wurde das überschüssige n-Butanol im Vakuum (<30 mbar) abdestilliert.

### Benzyletherharz Beispiel 3 gemäß Ausführungsbeispiel 2 der DE 102006037288 A1

In einem mit Rührwerk, Rückflusskühler und Thermometer ausgestatteten Reaktionsgefäß wurden 698,4 g Phenol (99%), 302,6 g Paraformaldehyd (91%) und 0,35 g Zinkacetat-Dihydrat vorgelegt. Unter Rühren wurde die Temperatur gleichmäßig innerhalb 60 Minuten auf 105 bis 115°C erhöht und so lange gehalten, bis ein Brechungsindex (25°C) von 1,5590 erreicht wurde. Anschließend wurden 50 g Palmer 1500-1 zugegeben und der Kühler auf atmosphärische Destillation umgestellt und die Temperatur innerhalb einer Stunde auf 124 bis 126°C gebracht. Bei dieser Temperatur wurde bis zum Erreichen eines Brechungsindex (25°C) von 1,5940 weiterdestilliert. Danach wurde Vakuum angelegt und bei vermindertem Druck bis zu einem Brechungsindex (25°C) von ca. 1,600 destilliert. Der freie Phenol-Gehalt, bestimmt gaschromatographisch, lag bei 12,5 Gew.%, der Saligenin Gehalt bei 9,5 Gew.%.

### Benzyletherharz Beispiel 4

In einem mit Rührwerk, Rückflusskühler und Thermometer ausgestatteten Reaktionsgefäß wurden 698,4 g Phenol (99%), 302,6 g Paraformaldehyd (91%) und 0,35 g Zinkacetat-Dihydrat vorgelegt. Unter Rühren wurde die Temperatur gleichmäßig innerhalb 60 Minuten auf 105 bis 115°C erhöht und so lange gehalten, bis ein Brechungsindex (25°C) von 1,5590 erreicht wurde. Anschließend wurden 50 g Palmer 1500-1 zugegeben, der Kühler auf atmosphärische Destillation umgestellt und die Temperatur innerhalb einer Stunde auf 124 bis 126°C gebracht. Bei dieser Temperatur wurde bis zum Erreichen eines Brechungsindex (25°C) von 1,5940 weiterdestilliert. Danach wurde Vakuum angelegt und bei vermindertem Druck bis zu einem Brechungsindex (25°C) von ca. 1,600 destilliert. Anschließend wurden pro 90 Gewichtsteile des erhaltenen Harzes mit 10 Gewichtsteilen n-Butanol versetzt und 60 Minuten unter Rückfluß bei 122 bis 124°C gehalten. Unter Vakuum wurde anschließend das nicht umgesetzte Butanol entfernt. Das Harz wies einen Brechungsindex (25°) von ca. 1,5970 auf. Der freie Phenol Gehalt, bestimmt gaschromatographisch lag bei 10,3 Gew.%, der Saligenin Gehalt lag bei 8,2 Gew. %.

### Messung der Viskosität

Die Viskosität wurde mit Hilfe eines Brookfield Rotationsviskosimeters, Verfahren "Small Sample", Spindel Nr. 21 bei 100 U/Min und 25°C bestimmt.

### Messung des Phenol- und Saligenin-Gehalts

Der Phenol und Saligenin-Gehalt wurde mittels Gaschromatograpie wie nachfolgend beschrieben bestimmt,

### Methodenbeschreibung:

| | |
|---|---|
| Kalibrierung: | Interne Standard-Methode, 7 Punkt- Kalibrierung je zu bestimmende Substanz |
| Interner Standard: | 2,4,6 Trimethylphenol p.A. |
| Standard-Substanzen: | Phenol p.A. und Saligenin (o-Hydroxybenzylalkohol) p.A. |
| Gaschromatograph: | Agilent 7890 Plus, mit FID, Kapillarsäule, Autosampler und Agilent-ChemStation |

### Geräteparameter:

| | |
|---|---|
| Einlasssystem: | Split/Splitless-Injektor, Split 50:1 (79,9ml/min) nach 2 Minuten Laufzeit 20 ml/min |
| | Temperatur: 280°C |
| Trägergas: | Wasserstoff 5.0, Fluss 1ml/min, Const.-Flow-Methode |
| Kappillarsäule: | HP-5MS, HP 19091S-105, Länge 50 m, Durchmesser 0,2 mm, Film 0,33µm |
| Temperaturprog..: | 60°C bis 1,5 min; 4,0°C/min bis 140°C null Minuten halten dann 20°C/min bis auf 325 °C, 6 Minuten bei 325 °C halten |
| Detektor: | FID, Temperatur 320°C |
| | Brenngas Wasserstoff 5.0 mit 20 ml/min, Synthetische Luft 5.0 mit 350ml/min, Makeup-Gas: Stickstoff 5.0 mit 25 ml/min |
| Autosampler: | 10µl-GC-Spritze, 1µl dosiert, Fast Injektion Mode |
| Quantifizierung: | Agilent-Chemstation Standard-Einstellung, Interne Standard Methode, Angabe des Ergebnisses in Gew % |

### Bestimmung der Kältestabilität

Für 24h wurden die Lösungen (A1 bis B9) bei -18°C eingefroren und anschließend optisch die Homogenität, nachdem wieder Raumtemperatur erreicht wurde, beurteilt, ohne dass die Probenbehältnisse gerührt oder geschüttelt wurden.

### Empirische Parameter der Lösungsmittelpolarität: ET(30)-Werte

Mit Hilfe des negativ solvatochromen Pyridinium-N-Phenolat-Betainfarbstoffs ET(30) wurde die Polarität der Lösungsmittelgemische durch Messung der längstwelligen Vis/NIR-Absorptionsbande (bei 25 °C und 1 bar) bestimmt. Dabei entsprechen hohe ET(30)-Werte einer hohen Solvens-Polarität. Die Werte sind den folgenden Artikeln entnehmbar:
C. Reichardt, Chem. Rev. 1994, 94, 2319 - 2358.
C. Reichardt, G. Schäfer, Liebigs Ann. 1995, 1579 - 1582.
R. Eberhardt, S. Löbbecke, B. Neidhart, C. Reichardt, Liebigs Ann. /Recueil 1997, 1195 - 1199.
C. Reichardt, Green Chem. 2005, 7, 339 - 351.
V. G. Machado, R. I. Stock, C. Reichardt, Chem. Rev. 2014, 114, 10429-10475.

### Bestimmung der Löslichkeit

Unmittelbar nach Erreichen des Endwertes (Abbruchkriterium) der Benzyletherharzsynthese (Beispiele 1 bis 4) wurde das heiße Benzyletherharz in die Raumtemperatur messenden Lösemittel bzw. Lösemittelgemische der in Tabelle 1 und 2 genannten Stoffe durch Eintrag von mechanischer Energie (Rühren und/oder Schütteln) eingebracht. Eine abschließende Beurteilung der Löslichkeit erfolgte, nachdem die Mischung luftfrei war.

### Bestimmung der Festigkeiten in N/cm²

In einem Hobart Mischer wurde eine Sandmischung aus Quarzsand H 32, plus 0,60% der oben genannten Binderzusammensetzungen (jeweils einzeln für die Beispiele A1 bis B6) und 0,60% ISOCYANAT KOMPONENTE homogen über 2 Minuten vermischt. Diese Sandmischung wurde in eine Kernschießmaschine Modell Roeper H 1 überführt und es wurden jeweils zwei Kerne mit einer Dimension (l x b x h) von 220mm x 22,4mm x 22,4mm mit einem Schießdruck von 4 bar mittels Druckluft in die Form gebracht. Mittels KATALYSATOR 706 (0,5 ml, Begasungszeit 10 sec bei 2 bar Spüldruck) wurde der Sand ausgehärtet. Nach dem Aushärten wurde der Kern entnommen und mit einem Multiserw Biegegerät die Festigkeit nach 15 Sekunden bzw. nach 30 Sekunden, 24h Lagerung bei Raumtemperatur und nach 24h Lagerung bei Raumtemperatur in einem geschlossenen Raum mit 98% relativer Luftfeuchte (24h 98% rLf) bestimmt.

| | A1 | A2 | A3 | A4 | A6 | A7 |
|---|---|---|---|---|---|---|
| Benzyletherharz gemäß Bsp. 1 | 53 | | 53 | | 53 | 53 |
| Benzyletherharz gemäß Bsp. 2 | | 53 | | 53 | | |
| Dynasilan A | 46 | 46 | 38 | 38 | 45 | 37 |
| DBE | | | 8 | 8 | | 8 |
| Phenol | | | | | 1 | 1 |
| Silan Glymo | 1 | 1 | 1 | 1 | 1 | 1 |
| Palmer 1500-1 | | | | | | |
| | | | | | | |
| Löslichkeit | nein | ja | ja | ja | nein | ja |
| Viskosität mPas (25°C) | n.m. | 12 | 134 | 10 | n.m. | 112 |
| Kältestabilität -18°C | n.m. | ja | nein | ja | n.m. | ja |

Angaben in Gew%, wenn nicht anders angegeben.
n.m. = nicht messbar

**Tabelle 1 zeigt die als Vergleich herangezogenen Benzyletherharzmischungen und deren Löslichkeiten.**

| | B1 | B2 | B3 | B4 | B5 | B6 |
|---|---|---|---|---|---|---|
| Benzyletherharz gemäß Bsp. 1 | | | | | | |
| Benzyletherharz gemäß Bsp. 3 | 53 | | 53 | | 53 | |
| Benzyletherharz gemäß Bsp. 4 | | 53 | | 53 | | 53 |
| Dynasylan A | 46 | 46 | 38 | 38 | 36 | 36 |
| DBE | | | 8 | 8 | 8 | 8 |
| Silan Glymo | 1 | 1 | 1 | 1 | 1 | 1 |
| Palmer 1500-1 | | | | | 2 | 2 |
| | | | | | | |
| Löslichkeit | ja | ja | ja | ja | ja | ja |
| Viskosität mPas (25°C) | 76 | 67 | 68 | 63 | 77 | 70 |
| Kältestabilität -18°C | ja | ja | ja | ja | ja | ja |

Angaben in Gew%, wenn nicht anders angegeben.

**Tabelle 2 zeigt die erfindungsgemäßen Benzyletherharzmischungen und deren Löslichkeit.**

| | Vergleich | erfindungsgemäß | |
|---|---|---|---|
| | A 5 | B 7 | B 8 |
| Benzyletherharz gemäß Bsp. 1 | 53 | | |
| Benzyletherharz gemäß Bsp. 3 | | 53 | |
| Benzyletherharz gemäß Bsp. 4 | | | 53 |
| Solvesso 100 | 46 | 46 | 46 |
| Silan Glymo | 1 | 1 | 1 |
| | | | |
| Löslichkeit | nein | ja | ja |
| Viskosität mPas (25°C) | n.m. | 76 | 65 |

**Tabelle 3 zeigt die erfindungsgemäßen Benzyletherharzmischungen und deren Löslichkeit.**

| | A1 | A 2 | A3 | A4 |
|---|---|---|---|---|
| sofort 15 sec | n.m. | 62 | 175 | 55 |
| sofort 30 sec | n.m. | 78 | 175 | 70 |
| 24h | n.m. | 306 | 230 | 321 |
| 24h 98% rLf | n.m. | 169 | 98 | 178 |

| | | | | |
|---|---|---|---|---|
| n.m. = nicht messbar | | | | |

**Tabelle 4 zeigt die Festigkeiten im Vergleich**

| | B1 | B2 | B3 | B4 | B5 | B6 |
|---|---|---|---|---|---|---|
| sofort 15 sec | 119 | 165 | 188 | 162 | 180 | 160 |
| sofort 30 sec | 127 | 172 | 193 | 174 | 182 | 165 |
| 24h | 243 | 291 | 302 | 278 | 289 | 265 |
| 24h 98% rLf | 95 | 112 | 108 | 107 | 127 | 129 |

Tabelle 5 zeigt die Festigkeiten der erfindungsgemäßen Formstoffmischungen

Aus den Ergebnistabellen ist ersichtlich, dass die zu den erfindungsgemäßen Benzyletherharzmischungen B1 - B6 führenden Benzyletherharze gemäß Beispielen 3 und 4 sich vollständig in Tetraethylorthosilikat und Solvesso 100 lösen. Dieses wird auch an anderen Beispielen durch die geringere Viskosität und verbesserte Kältestabilität verdeutlicht. Betrachtet man die Viskosität bei gleichem Restphenolgehalt (da Phenol die Viskositäten ebenfalls reduziert, Beispiel A1, A6, B1 bzw. A3, A7, B3), erhält man mit den Harzen gemäß der Benzyletherharze der Beispiele 3 und 4 ebenfalls dünnflüssigere Harzlösungen.

Benzyletherharz 2 zeigt zwar auch eine gute Löslichkeit in unpolaren Lösemitteln, erzielt dafür aber keine zufriedenstellende Sofortfestigkeiten.

Betrachtet man die Beispiele B3 zu B5 und B4 zu B6, so erkennt man, dass ein Zusatz von Cardanol/Cardol die Feuchtebeständigkeit der Bindemittel verbessert und hilft, die Plastizität der Sandkerne zu verbessern.

## Patentansprüche

1. Komponentensystem zum Aushärten von Formstoffmischungen aufweisend räumlich getrennt voneinander zumindest:
- eine Polyol-Komponente, wobei die Polyol-Komponente ein Phenolharz vom Benzylethertyp und ein Lösungsmittel enthält;
- eine Isocyanat-Komponente aus einem oder mehreren Isocyanat-Verbindungen mit zumindest 2 Isocyanat-Gruppen pro Molekül;
wobei das Phenolharz vom Benzylethertyp zumindest ein mit einem aliphatischen Kohlenwasserstoffrest substituiertes Phenol als Monomerbaustein aufweist, das am Aromaten mit einem aliphatischen Kohlenwasserstoffrest mit 11 bis 26 Kohlenstoffatomen und 0 bis 4 Doppelbindungen substituiert ist, und der Anteil des Kohlenwasserstoffrest-substituierten Phenols im Phenolharz 0,5 bis 20 Gew.% beträgt; **dadurch gekennzeichnet, dass** die Polyol-Komponente ein Lösungsmittel enthält, das zumindest zu 95 Gew.% ein unpolares Lösungsmittel ist und das unpolare Lösungsmittel ausgewählt ist aus Kohlenwasserstoffen, Alkyl-/Alkoxy-Silanen, Alkyl-/Alkoxy-Siloxanen und deren Gemischen und
das Phenolharz vom Benzylethertyp im Lösungsmittel gelöst ist.

2. Komponentensystem nach Anspruch 1, wobei bis zu 25 mol% der -CH₂-OH Gruppen des Phenolharzes vom Benzylethertyp mit C₁- bis C₁₂-, insbesondere C₁-bis C₄-Kohlenwasserstoffgruppen, verethert sind.

3. Komponentensystem nach zumindest einem der vorhergehenden Ansprüche, wobei das Lösemittel in einer Menge, bezogen auf die Polyol-Komponente, von 10 bis 70 Gew.%, besonders bevorzugt von 26 bis 55 Gew. % und insbesondere bevorzugt von 41 bis 50 Gew.% verwendet wird.

4. Komponentensystem nach zumindest einem der vorhergehenden Ansprüche, wobei das Phenolharz weniger als 2,5 Gew.%, vorzugsweise weniger 2 Gew.%, freies Phenol enthält.

5. Komponentensystem nach zumindest einem der vorhergehenden Ansprüche, wobei die Polyol-Komponente weiterhin freies Saligenin enthält in einem Gewichtsverhältnis von freiem Phenol zu freiem Saligenin von 1 zu größer 1.

6. Komponentensystem nach zumindest einem der vorhergehenden Ansprüche, wobei das unpolare Lösungsmittel ein Alkylbenzol ist, vorzugsweise ein Alkylbenzol mit 7 bis 13 Kohlenstoffatomen, insbesondere Trimethylbenzol und Propylbenzol.

7. Komponentensystem nach zumindest einem der vorhergehenden Ansprüche, wobei das unpolare Lösungsmittel ein C₆- bis C₂₂- Alkan ist.

8. Komponentensystem nach zumindest einem der vorhergehenden Ansprüche, wobei das Alkyl-/Alkoxy-Silan ein Tetraethylorthosilikat oder ein Tetrapropylorthosilikat, deren Oligomere, sowie deren Mischung ist.

9. Komponentensystem nach zumindest einem der vorhergehenden Ansprüche, wobei das unpolare Lösungsmittel einen E_{T}(30) Wert von kleiner 35 aufweist.

10. Komponentensystem nach zumindest einem der vorhergehenden Ansprüche, wobei das Lösungsmittel als Co-Lösungsmittel einen Diester einer Dicarbonsäure enthält, vorzugsweise einer verzweigten Dicarbonsäure.

11. Komponentensystem nach zumindest einem der vorhergehenden Ansprüche, wobei das Phenolharz vom Benzylethertyp Phenol und Kresol als Monomerbausteine enthält, wobei der molare Anteil des in das Phenolharz eingebauten Kresols kleiner ist oder gleich wie der des in das Phenolharz eingebauten Phenols ist.

12. Komponentensystem nach zumindest einem der vorhergehenden Ansprüche, wobei die Polyol-Komponente
a) weniger als 1,5 Gew% Wasser, besonders bevorzugt weniger als 1,0 Gew % und insbesondere bevorzugt weniger als 0,8 Gew% Wasser enthält.

13. Komponentensystem nach zumindest einem der vorhergehenden Ansprüche, wobei die Polyol-Komponente
a) weniger als 2 Gew%, besonders bevorzugt weniger als 1,5 Gew.% und insbesondere bevorzugt weniger als 1,0 Gew% aliphatische Alkohole enthält,
oder
b) wenn Alkyl-/Alkoxy-Silane, Alkyl/Alkoxy-Siloxane oder deren Gemische eingesetzt werden, weniger als 1,5 Gew%, bevorzugt weniger als 1,0 Gew% und insbesondere bevorzugt weniger als 0,8 Gew% aliphatische Alkohole enthält.

14. Komponentensystem nach zumindest einem der vorhergehenden Ansprüche, wobei das Phenolharz ein mittleres Molekulargewicht (Mw) von 600 bis 1200 g/mol, insbesondere von 600 bis 1000 g/mol aufweist, gemessen nach DIN 5567-1.

15. Komponentensystem nach zumindest einem der vorhergehenden Ansprüche enthaltend weiterhin räumlich getrennt einen feuerfesten Formgrundstoff als weitere Komponente.

16. Komponentensystem nach zumindest einem der vorhergehenden Ansprüche, wobei das mit einem aliphatischen Kohlenwasserstoffrest substituierte Phenol als Monomerbaustein durch eines oder mehrere der folgenden Merkmale weiter gekennzeichnet ist:
a) der aliphatische Kohlenwasserstoffrest weist 0 bis 3 Doppelbindungen auf;
b) das mit einem aliphatischen Kohlenwasserstoffrest substituierte Phenol ist als Monomer zu 0,5 bis 15 Gew.%, vorzugsweise 2 bis 12 Gew.%, in das Phenolharz vom Benzylethertyp eingebaut;
c) der aliphatische Kohlenwasserstoffrest ist an die meta- oder para- Position, bevorzugt an die meta- Position, des Phenol-Monomerbausteins gebunden;
d) das mit einem aliphatischen Kohlenwasserstoffrest substituierte Phenol ist Cardol und/oder Cardanol.

17. Formstoffmischung enthaltend die Polyol-Komponente und die Isocyanat-Komponente nach zumindest einem der Ansprüche 1 bis 16 und einem feuerfesten Formgrundstoff.

18. Verfahren zur Herstellung von Formen, Kernen oder Speisern unter Zusammenbringen der Polyol-Komponente und der Isocyanat-Komponente nach zumindest einem der Ansprüche 1 bis 16 und einem feuerfesten Formgrundstoff und Aushärten nach dem PU-No-Bake oder PU-Cold-Box Verfahren.

19. Verwendung einer Polyol-Komponente als Bestandteil eines Isocyanat-Bindemittels, wobei die Polyol-Komponente ein Phenolharz vom Benzylethertyp und ein Lösungsmittel enthält;
- eine Isocyanat-Komponente aus einem oder mehreren Isocyanat-Verbindungen mit zumindest 2 Isocyanat-Gruppen pro Molekül;
wobei das Phenolharz zumindest ein Kohlenwasserstoff-substituiertes Phenol als Monomerbaustein aufweist, das am Aromaten mit einem aliphatischen Kohlenwasserstoffrest mit 11 bis 26 Kohlenstoffatomen und 0 bis 4 Doppelbindungen substituiert ist, und der Anteil des Kohlenwasserstoff-substituierten Phenols im Phenolharz 0,5 bis 20 Gew.% beträgt;
wobei die Polyol-Komponente ein Lösungsmittel enthält, das zumindest zu 95 Gew.% ein unpolares Lösungsmittel ist und das unpolare Lösungsmittel ausgewählt aus Kohlenwasserstoffen, Alkyl-/Alkoxy-Silanen, Alkyl-/Alkoxy-Siloxanen und deren Gemischen und
das Phenolharz vom Benzylethertyp im Lösungsmittel gelöst ist.

20. Verwendung nach Anspruch 19, wobei das mit einem aliphatischen Kohlenwasserstoffrest substituierte Phenol als Monomerbaustein durch eines oder mehrere der folgenden Merkmale weiter gekennzeichnet ist:
a) der aliphatische Kohlenwasserstoffrest weist 0 bis 3 Doppelbindungen auf;
b) das mit einem aliphatischen Kohlenwasserstoffrest substituierte Phenol ist als Monomer zu 0,5 bis 15 Gew.%, vorzugsweise 2 bis 12 Gew.%, in das Phenolharz vom Benzylethertyp eingebaut;
c) der aliphatische Kohlenwasserstoffrest ist an die meta- oder para- Position, bevorzugt an die meta- Position, des Phenol-Monomerbausteins gebunden;
d) das mit einem aliphatischen Kohlenwasserstoffrest substituierte Phenol ist Cardol und/oder Cardanol.

## Claims

1. A component system for hardening mold material mixtures comprising spatially separate from each other at least:
- a polyol component, wherein the polyol component comprises a phenolic resin of the benzyl ether type and a solvent;
- an isocyanate component being one or more isocyanate compounds having at least 2 isocyanate groups per molecule;
wherein the phenolic resin of the benzyl ether type comprises at least one aliphatic hydrocarbon group-substituted phenol as a monomer building block that is substituted on the aromatic ring with an aliphatic hydrocarbon group having 11 to 26 hydrocarbon atoms and 0 to 4 double bonds, and the portion of the hydrocarbon group-substituted phenol in the phenolic resin is 0.5 to 20% by weight; **characterized in that** the polyol component comprises a solvent which is at least 95% by weight a nonpolar solvent and the nonpolar solvent is selected from hydrocarbons, alkyl/alkoxy silanes, alkyl/alkoxy siloxanes and their mixtures, and
the phenolic resin of the benzyl ether type is dissolved in the solvent.

2. The component system according to claim 1, wherein up to 25 mole % of the -CH₂-OH groups of the phenolic resin of the benzyl ether type is etherified with C₁ to C₁₂, in particular C₁ to C₄ hydrocarbon groups.

3. The component system according to at least one of the preceding claims, wherein the solvent is used in an amount, relative to the polyol component, of 10 to 70% by weight, particularly preferably 26 to 55% by weight, and especially preferably 41 to 50% by weight.

4. The component system according to at least one of the preceding claims, wherein the phenolic resin comprises less than 2.5% by weight, preferably less than 2% by weight free phenol.

5. The component system according to at least one of the preceding claims, wherein the polyol component further comprises free saligenin at a weight ratio of free phenol to free saligenin of 1 to greater than 1.

6. The component system according to at least one of the preceding claims, wherein the nonpolar solvent is an alkyl benzene, preferably an alkyl benzene with 7 to 13 carbon atoms, in particular trimethylbenzene and propylbenzene.

7. The component system according to at least one of the preceding claims, wherein the nonpolar solvent is a C₆ to C₂₂ alkane.

8. The component system according to at least one of the preceding claims, wherein the alkyl/alkoxy silane is a tetraethylorthosilicate or a tetrapropylorthosilicate, their oligomers as well as their mixture.

9. The component system according to at least one of the preceding claims, wherein the nonpolar solvent has an E_{T}(30) value of less than 35.

10. The component system according to at least one of the preceding claims, wherein the solvent comprises a diester of a dicarboxylic acid, preferably a branched dicarboxylic acid, as the co-solvent.

11. The component system according to at least one of the preceding claims, wherein the phenolic resin of the benzoyl ether type comprises phenol and cresol as monomer building blocks, wherein the molar share of the cresol incorporated in the phenolic resin is less than or equal to that of the phenol incorporated in the phenolic resin.

12. The component system according to at least one of the preceding claims, wherein the polyol component:
a) comprises less than 1.5% by weight water, particularly preferably less than 1.0%, and especially preferably less than 0.8% by weight water.

13. The component system according to at least one of the preceding claims, wherein the polyol component:
a) comprises less than 2% by weight, particularly preferably less than 1.5%, and especially preferably less than 1.0% by weight aliphatic alcohols
or
b) if alkyl/alkoxy silanes, alkyl/alkoxy siloxanes or their mixtures are used, comprises less than 1.5% by weight, preferably less than 1.0% by weight, and especially preferably less than 0.8% by weight aliphatic alcohols.

14. The component system according to at least one of the preceding claims, wherein the phenolic resin has an average molecular weight (Mw) of 600 to 1200 g/mol, in particular from 600 to 1,000 g/mol measured according to DIN 5567-1.

15. The component system according to at least one of the preceding claims, further comprising spatially separate a refractory mold base material as further component.

16. The component system according to at least one of the preceding claims, wherein the phenol substituted with an aliphatic hydrocarbon group is further characterized as a monomer building block by one or more of the following features:
a) the aliphatic hydrocarbon group comprises 0 to 3 double bonds;
b) the phenol substituted with an aliphatic hydrocarbon group is incorporated as a monomer by 0.5 to 15% by weight, preferably 2 to 12% by weight, in the phenolic resin of the benzyl ether type;
c) the aliphatic hydrocarbon group is bound at the meta or para position, preferably at the meta position, of the phenol monomer building block;
d) the phenol substituted with an aliphatic hydrocarbon group is cardol and/or cardanol.

17. A molding material mixture comprising the polyol component and the isocyanate component according to at least one of claims 1 to 16, and a refractory mold base material.

18. A method for producing molds, cores or risers by combining the polyol component and the isocyanate component according to at least one of claims 1 to 16, and a refractory mold base material, and hardening according to the PU no-bake or PU cold box method.

19. A use of a polyol component as a constituent of an isocyanate binder, wherein the polyol component comprises a phenolic resin of the benzyl ether type and a solvent;
- an isocyanate component being one or more isocyanate compounds having at least 2 isocyanate groups per molecule;
wherein the phenolic resin comprises at least one hydrocarbon-substituted phenol as a monomer component that is substituted on the aromatic ring with an aliphatic hydrocarbon group having 11 to 26 hydrocarbon atoms and 0 to 4 double bonds, and the portion of hydrocarbon-substituted phenol in the phenolic resin is 0.5 to 20% by weight;
wherein the polyol component comprises a solvent which is at least 95% by weight a nonpolar solvent, and the nonpolar solvent is selected from hydrocarbons, alkyl/alkoxy silanes, alkyl/alkoxy siloxanes and their mixtures, and
the phenolic resin of the benzyl ether type is dissolved in the solvent.

20. The use according to claim 19, wherein the phenol substituted with an aliphatic hydrocarbon group is further characterized as a monomer building block by one or more of the following features:
a) the aliphatic hydrocarbon group comprises 0 to 3 double bonds;
b) the phenol substituted with an aliphatic hydrocarbon group is incorporated as a monomer by 0.5 to 15% by weight, preferably 2 to 12% by weight, in the phenolic resin of the benzyl ether type;
c) the aliphatic hydrocarbon group is bound at the meta or para position, preferably at the meta position, of the phenol monomer building block;
d) the phenol substituted with an aliphatic hydrocarbon group is cardol and/or cardanol.

## Revendications

1. Système d'éléments destiné au durcissement de mélanges de matières de moulage comprenant, espacés les uns des autres, au moins :
- un élément polyol, l'élément polyol contenant une résine phénolique de type éther benzylique et un solvant ;
- un élément polyisocyanate provenant d'un ou de plusieurs composés isocyanate ayant au moins 2 groupes isocyanate par molécule ;
dans lequel la résine phénolique de type éther benzylique présente au moins un phénol substitué par un radical hydrocarboné aliphatique en tant que motif monomère, qui est substitué sur l'aromate par un radical hydrocarboné aliphatique ayant 11 à 26 atomes de carbone et 0 à 4 doubles liaisons, et la proportion du phénol substitué par le radical hydrocarboné dans la résine phénolique est de 0,5 à 20 % en poids ;
**caractérisé en ce que** l'élément polyol comprend un solvant, qui est un solvant non polaire à au moins 95 % en poids et le solvant non polaire est choisi parmi les hydrocarbures, les alkyl/alcoxysilanes, les alkyl/alcoxysiloxanes et leurs mélanges et
la résine phénolique de type éther benzylique est dissoute dans le solvant.

2. Système d'éléments selon la revendication 1, dans lequel jusqu'à 25 % en moles des groupes -CH₂-OH de la résine phénolique de type éther benzylique sont éthérifiés avec des groupes hydrocarbonés en C₁ à C₁₂, en particulier en C₁ à C₄.

3. Système d'éléments selon au moins l'une des revendications précédentes, dans lequel le solvant est utilisé en une quantité, par rapport à l'élément polyol, de 10 à 70 % en poids, de manière particulièrement préférée de 26 à 55 % en poids, et de manière tout particulièrement préférée de 41 à 50 % en poids.

4. Système d'éléments selon au moins l'une des revendications précédentes, dans lequel la résine phénolique comprend moins de 2,5 % en poids, de préférence moins de 2 % en poids de phénol libre.

5. Système d'éléments selon au moins l'une des revendications précédentes, dans lequel l'élément polyol comprend en outre de la saligénine libre en un rapport en poids de phénol libre sur la saligénine libre de 1 à plus de 1.

6. Système d'éléments selon au moins l'une des revendications précédentes, dans lequel le solvant non polaire est un alkylbenzène, de préférence un alkylbenzène ayant de 7 à 13 atomes de carbone, en particulier un triméthylbenzène et un propylbenzène.

7. Système d'éléments selon au moins l'une des revendications précédentes, dans lequel le solvant non polaire est un alcane en C₆ à C₂₂.

8. Système d'éléments selon au moins l'une des revendications précédentes, dans lequel l'alkyl/alcoxysilane est un orthosilicate de tétraéthyle ou un orthosilicate de tétrapropyle, leurs oligomères, et leur mélange.

9. Système d'éléments selon au moins l'une des revendications précédentes, dans lequel le solvant non polaire présente une valeur E_{T}(30) inférieure à 35.

10. Système d'éléments selon au moins l'une des revendications précédentes, dans lequel le solvant comprend comme co-solvant un diester d'un acide dicarboxylique, de préférence d'un acide dicarboxylique ramifié.

11. Système d'éléments selon au moins l'une des revendications précédentes, dans lequel la résine phénolique de type éther benzylique comprend du phénol et du crésol comme motifs monomères, la proportion molaire du crésol intégré dans la résine phénolique étant inférieure ou égale à celle du phénol intégré dans la résine phénolique.

12. Système d'éléments selon au moins l'une des revendications précédentes, dans lequel l'élément polyol comprend
a) moins de 1,5 % en poids d'eau, de manière particulièrement préférée moins de 1,0 % en poids et de manière tout particulièrement préférée moins de 0,8 % en poids d'eau.

13. Système d'éléments selon au moins l'une des revendications précédentes, dans lequel l'élément polyol comprend
a) moins de 2 % en poids, de manière particulièrement préférée moins de 1,5 % en poids et de manière tout particulièrement préférée moins de 1,0 % en poids d'alcools aliphatiques, ou
b) si des alkyl/alcoxysilanes, des alkyl/alcoxysiloxanes ou leurs mélanges sont mis en œuvre, moins de 1,5 % en poids, de manière préférée moins de 1,0 % en poids et de manière particulièrement préférée moins de 0,8 % en poids d'alcools aliphatiques.

14. Système d'éléments selon au moins l'une des revendications précédentes, dans lequel la résine phénolique comprend un poids moléculaire moyen (Mw) de 600 à 1200 g/mol, en particulier de 600 à 1000 g/mole, mesuré d'après la norme DIN 5567-1.

15. Système d'éléments selon au moins l'une des revendications précédentes, comprenant en outre, de manière espacée, une matière de base de moulage réfractaire comme autre élément.

16. Système d'éléments selon au moins l'une des revendications précédentes, dans lequel le phénol substitué par un radical hydrocarboné aliphatique en tant que motif monomère est en outre **caractérisé par** l'une ou plusieurs des caractéristiques suivantes :
a) le radical hydrocarboné aliphatique présente 0 à 3 doubles liaisons ;
b) le phénol substitué par un radical hydrocarboné aliphatique est intégré dans la résine phénolique de type éther benzylique à un taux de 0,5 à 15 % en poids, de préférence 2 à 12 % en poids en tant que monomère ;
c) le radical hydrocarboné aliphatique est lié en position méta ou para, de préférence en position méta du motif monomère du phénol ;
d) le phénol substitué par un radical hydrocarboné aliphatique est le cardol et/ou le cardanol.

17. Mélange de matières de moulage comprenant l'élément polyol et l'élément isocyanate selon au moins l'une des revendications 1 à 16 et une matière de base de moulage réfractaire.

18. Procédé de fabrication de moules, noyaux ou masselottes en réunissant l'élément polyol et l'élément isocyanate selon au moins l'une des revendications 1 à 16 et une matière de base de moulage réfractaire et en effectuant le durcissement selon le procédé PU sans cuisson ou PU en boîte froide.

19. Utilisation d'un élément polyol comme ingrédient d'un liant isocyanate, dans laquelle l'élément polyol comprend une résine phénolique de type éther benzylique et un solvant ;
- un élément polyisocyanate provenant d'un ou de plusieurs composés isocyanate ayant au moins 2 groupes isocyanate par molécule ;
dans laquelle la résine phénolique présente au moins un phénol substitué par un radical hydrocarboné en tant que motif monomère, qui est substitué sur l'aromate par un radical hydrocarboné aliphatique ayant 11 à 26 atomes de carbone et 0 à 4 doubles liaisons, et la proportion du phénol substitué par le radical hydrocarboné dans la résine phénolique est de 0,5 à 20 % en poids ;
dans laquelle l'élément polyol comprend un solvant, qui est un solvant non polaire à au moins 95 % en poids et le solvant non polaire est choisi parmi les hydrocarbures, les alkyl/alcoxysilanes, les alkyl/alcoxysiloxanes et leurs mélanges et
la résine phénolique de type éther benzylique est dissoute dans le solvant.

20. Utilisation selon la revendication 19, dans laquelle le phénol substitué par un radical hydrocarboné aliphatique en tant que motif monomère est en outre **caractérisé par** l'une ou plusieurs des caractéristiques suivantes :
a) le radical hydrocarboné aliphatique présente 0 à 3 doubles liaisons ;
b) le phénol substitué par un radical hydrocarboné aliphatique est intégré dans la résine phénolique de type éther benzylique à un taux de 0,5 à 15 % en poids, de préférence 2 à 12 % en poids en tant que monomère ;
c) le radical hydrocarboné aliphatique est lié en position méta ou para, de préférence en position méta du motif monomère du phénol ;
d) le phénol substitué par un radical hydrocarboné aliphatique est le cardol et/ou le cardanol.
